# EUROPÄISCHE PATENTANMELDUNG

(11) **EP 2 456 183 A2**
(43) Veröffentlichungstag der Anmeldung: **23.05.2012**
(21) Anmeldenummer: 11008812.7
(22) Anmeldetag: 05.11.2011
(51) Int. Cl.: H04M 3/436

(54) **Verfahren zum Verarbeiten von eingehenden Anrufen auf einem Kommunikationsendgerät**

(30) Priorität: 18.11.2010 DE 102010051545
(71) Anmelder: Astrium GmbH, 82024 Taufkirchen (DE)
(72) Erfinder: Daubrawa, Julian, 81673 München (DE)
(74) Vertreter: Avenhaus, Beate

(57) **Zusammenfassung**

Die Erfindung beschreibt ein Verfahren zum Verarbeiten von eingehenden Anrufen auf einem Kommunikationsendgerät, insbesondere einem Mobilfunktelefon. In dem erfindungsgemäßen Verfahren wird zur Anrufsignalisierung anhand eines Vergleichs der Anrufkennung eines anrufenden Kommunikationsendgeräts mit Anrufkennungen, die in einer, dem angerufenen Kommunikationsendgerät zugeordneten Liste enthalten sind, überprüft, ob die Anrufkennung des anrufenden Kommunikationsendgeräts eine zulässige Anrufkennung ist. Zusätzlich wird überprüft, ob der Zeitpunkt des Anrufs des anderen Kommunikationsteilnehmers ein vorgegebenes Zeitkriterium erfüllt, wobei der Anruf nur dann signalisiert wird, wenn die Anrufkennung zulässig und das Zeitkriterium erfüllt sind.

## Beschreibung

Die Erfindung betrifft ein Verfahren zum Verarbeiten von eingehenden Anrufen auf einem Kommunikationsendgerät, insbesondere einem Mobilfunktelefon, bei dem zur Anrufsignalisierung anhand eines Vergleichs der Anrufkennung eines anrufenden Kommunikationsendgeräts mit Anrufkennungen, die in einer, dem angerufenen Kommunikationsendgerät zugeordneten, Liste enthalten sind, überprüft wird, ob die Anrufkennung des anrufenden Kommunikationsendgeräts eine zulässige Anrufkennung ist.

Eine derartige Vorgehensweise dient in der Regel dazu, unerwünschte Anrufer, die anhand ihrer Anrufkennung (Telefonnummer) identifiziert werden, zu unterdrücken, d.h. einen entsprechenden Anruf nicht beim angerufenen Kommunikationsendgerät zu signalisieren. Hierzu werden erwünschte Anrufkennungen z.B. in einer Positivliste, einer sog. White List, eingetragen. Bei einem Anruf eines Kommunikationsendgeräts, dem eine solche Positivliste zugeordnet ist, wird überprüft, ob die Anrufkennung des anrufenden Kommunikationsendgeräts in der Liste enthalten ist. Ist dies der Fall, so darf der Anruf signalisiert werden. Alle anderen, nicht in der Positivliste enthaltenen Anrufkennungen, werden hingegen blockiert. Ebenso bekannt sind Negativlisten (sog. Black Lists), die den umgekehrten Fall der selektiven Sperrung unerwünschter Anrufkennungen ermöglichen. Bei Negativlisten werden die in der Liste enthaltenen Anrufkennungen unterdrückt.

Üblicherweise sind Positivlisten und Negativlisten hinsichtlich der sie enthaltenen Anrufkennungen veränderbar. Die veränderbare Positivliste ermöglicht es den Nutzern, den Kommunikationsanschluss ausschließlich für fest definierte Anrufkennungen (Rufnummern bzw. Rufnummernblöcke) frei zu schalten. Die veränderbare Negativliste ermöglicht die gezielte Sperrung von Anrufkennungen.

Positiv- und Negativlisten werden trotz der Möglichkeit der Veränderung üblicherweise statisch verwendet. Dies bedeutet, sie werden einmal eingerichtet, gegebenenfalls in regelmäßigen oder unregelmäßigen Abständen aktualisiert, um unerwünschte Anrufer von erwünschten Anrufern zu trennen. Allerdings bieten diese Listen nicht die Möglichkeit, Anrufkennungen im Rahmen von bestimmten Ereignissen selektiv zu verarbeiten, beispielsweise in einer bestimmten Situation als zulässige Anrufkennung und in einer anderen Situation als unzulässige Anrufkennung zu behandeln.

Es ist daher Aufgabe der vorliegenden Erfindung, ein Verfahren anzugeben, mit dem eine flexiblere Verarbeitung von eingehenden Anrufen auf einem Kommunikationsendgerät ermöglicht wird.

Diese Aufgabe wird gelöst durch ein Verfahren gemäß den Merkmalen des Patentanspruches 1. Vorteilhafte Ausgestaltungen ergeben sich aus den abhängigen Patentansprüchen.

Die Erfindung schafft ein Verfahren zum Verarbeiten von eingehenden Anrufen auf einem Kommunikationsendgerät, insbesondere einem Mobilfunktelefon, bei dem zur Anrufsignalisierung anhand eines Vergleichs der Anrufkennung eines anrufenden Kommunikationsendgeräts mit Anrufkennungen, die in einer, dem angerufenen Kommunikationsendgerät zugeordneten Liste enthalten sind, überprüft wird, ob die Anrufkennung des anrufenden Kommunikationsendgeräts eine zulässige Anrufkennung ist. Erfindungsgemäß wird zusätzlich überprüft, ob der Zeitpunkt des Anrufs des anderen Kommunikationsteilnehmers ein vorgegebenes Zeitkriterium erfüllt, wobei der Anruf nur dann signalisiert wird, wenn die Anrufkennung zulässig und das Zeitkriterium erfüllt sind.

Das erfindungsgemäße Verfahren ermöglicht es, selektiv Anrufe auf einem Kommunikationsendgerät, die während eines gewissen Zeitraums unwichtig oder unerwünscht sind, nicht als Anruf zu signalisieren. Wichtige oder erwünschte Anrufe können weiterhin signalisiert werden. Unerwünschte Anrufe könnten beispielsweise Anrufe während der Schlafenszeit sein, die von unbekannten Personen kommen. Ein Abschalten des Kommunikationsendgeräts während des gewissen Zeitraums würde demgegenüber dazu führen, dass wichtige oder erwünschte Telefonate verpasst werden könnten. Im Gegensatz zu einer Änderung der Liste mit Anrufkennungen, die dem angerufenen Kommunikationsendgerät zugeordnet sind, lässt sich das Zeitkriterium, z.B. ein bestimmter Zeitraum, mit geringerem Aufwand in kürzerer Weise verändern. Die Kaskadierung zweier unterschiedlicher Kriterien ermöglicht es, bestimmte Anrufkennungen nicht grundsätzlich zu unterdrücken, sondern die Unterdrückung von einem Zeitkriterium abhängig zu machen. Um die Unterdrückung unerwünschter Anrufkennungen vorzunehmen, ist es lediglich für einen Nutzer des Kommunikationsendgeräts notwendig, das Zeitkriterium zu aktivieren. Demgegenüber wäre es bei der herkömmlich verwendeten Positiv- oder Negativlisten notwendig, die unerwünschten Anrufkennungen regelmäßig in die Liste aufzunehmen bzw. aus dieser zu entfernen. Das vorgeschlagene Vorgehen ist demgegenüber wesentlich einfacher handzuhaben und erlaubt dem Nutzer des Kommunikationsendgeräts eine flexiblere Behandlung eingehender Anrufe, abhängig von einer vorliegenden Situation.

Zweckmäßigerweise wird als vorgegebenes Zeitkriterium überprüft, ob der Anruf innerhalb eines vorgegebenen Zeitraums liegt. Liegt der Anruf unerwünschter Anrufkennungen (z.B. solcher, die nicht in einer Positivliste enthalten sind) innerhalb des vorgegebenen Zeitraums, so erfüllt dieser beispielsweise das Zeitkriterium nicht, so dass ein Anruf eines anrufenden Kommunikationsendgeräts mit unerwünschter Anrufkennung nicht beim angerufenen Kommunikationsendgerät signalisiert wird. Der Zeitraum kann beispielsweise die Schlafenszeit, eine Besprechung und dergleichen darstellen.

In einer zweckmäßigen Ausgestaltung wird der vorgegebene Zeitraum hinsichtlich seines Beginns und seiner Länge durch einen Nutzer des Kommunikationsendgeräts festgelegt. Die aktive Signalisierung von Anrufen mit unerwünschten Anrufkennungen kann damit nach Art eines "Weckers" aktiviert und deaktiviert werden.

Die die Anrufkennungen enthaltende Liste kann beispielsweise in dem angerufenen Kommunikationsendgerät gespeichert sein. Alternativ kann die die Anrufkennungen enthaltende Liste auf einem Rechner des Kommunikationsnetzes gespeichert sein, wobei die Kommunikationsendgeräte Teilnehmer des Kommunikationsnetzes sind.

In einer Ausgestaltung ist die erste Liste eine Positivliste (eine sog. White List), wobei bei erfülltem Zeitkriterium nur solche Anruferkennungen zur Anrufsignalisierung ausgegeben werden, die in der ersten Liste übereinstimmend enthalten sind. Zur Anrufsignalisierung müssen somit erfindungsgemäß zwei Bedingungen gleichzeitig gegeben sein: die Anrufkennung muss in der Liste der Anrufkennungen enthalten sein und gleichzeitig muss das Zeitkriterium erfüllt sein. Anrufe mit einer Anrufkennung der nicht in der Liste enthaltenen Anrufkennungen werden nur dann signalisiert, wenn diese außerhalb des durch das Zeitkriterium definierten Zeitraums erfolgen.

Die für die Erfindung notwendige Liste kann beispielsweise von einem Anfangszeitpunkt an bis zu einem Endzeitpunkt gültig sein und beispielsweise automatisch wiederholt werden, wenn der Anfangszeitpunkt wieder erreicht ist.

In einer alternativen Ausgestaltungsvariante könnte die Liste auch als Negativliste ausgebildet sein.

In einer weiteren Ausgestaltung wird der Anruf des anderen Kommunikationsendgeräts umgeleitet, wenn das Zeitkriterium nicht erfüllt ist und die Anrufkennung des anrufenden Kommunikationsendgeräts keine zulässige Anrufkennung ist. Insbesondere erfolgt hierbei eine Umleitung auf eine Mailbox des Kommunikationsendgeräts, so dass der Nutzer des anrufenden Kommunikationsendgeräts eine Nachricht für den Nutzer des angerufenen Kommunikationsendgeräts hinterlassen kann.

In einer weiteren Ausgestaltung wird die Zeit- und listenabhängige Steuerung von Anrufen in einem Profil des Kommunikationsendgeräts hinterlegt. Auf diese Weise ist eine einfache Aktivierung des erfindungsgemäßen Anrufmanagements möglich.

Obwohl die Reihenfolge der Überprüfung der beiden Kriterien prinzipiell unerheblich ist, ist es bevorzugt, wenn die Überprüfung des Zeitkriteriums vor der Überprüfung der Zulässigkeit der Anrufkennung des anrufenden Kommunikationsendgeräts erfolgt. Bei dieser Variante kann insbesondere der Fall berücksichtigt werden, dass lediglich die innerhalb einer Positivliste enthaltenen Anrufkennungen bei Erfüllung des Zeitkriteriums für eine Anrufsignalisierung verwendet werden. Beispielsweise kann hierdurch Familienangehörigen und/oder Freunden und/oder Geschäftspartnern usw. ein Anruf während vorbestimmter Zeiträume ermöglicht werden, während alle anderen Anrufer nicht signalisiert werden. Insbesondere ist es in diesem Zusammenhang möglich, mehrere unterschiedliche Listen dem Kommunikationsendgerät zuzuordnen und durch den Nutzer des Kommunikationsendgeräts eine oder mehrere der Listen auswählen zu lassen, deren Anrufkennungen während des vorbestimmten Zeitraumes zulässig sein sollen.

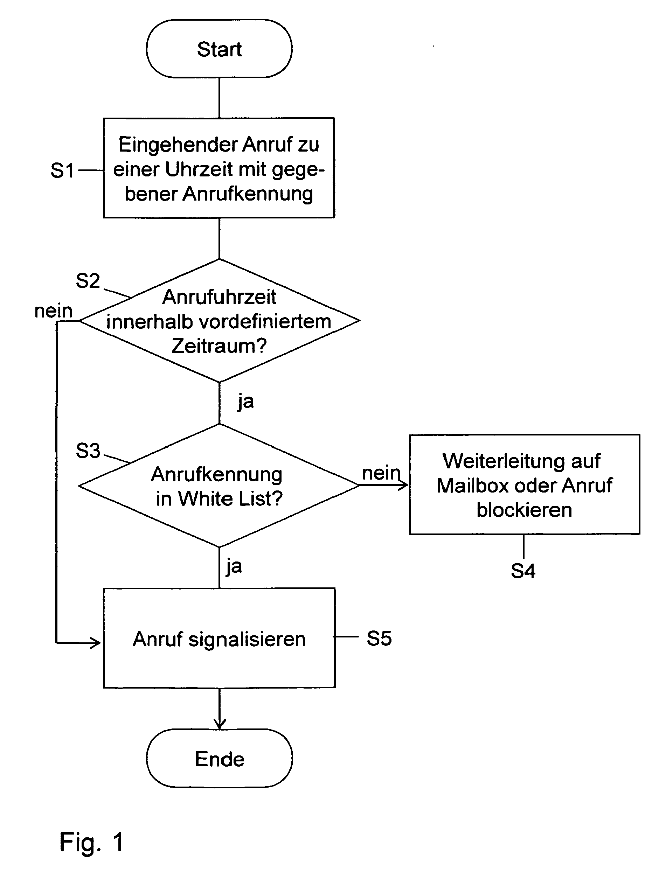

Die Erfindung wird nachfolgend näher anhand eines Ausführungsbeispiels erläutert. Die einzige Figur zeigt den schematischen Ablauf des erfindungsgemäßen Verfahrens.

Das erfindungsgemäße Verfahren von eingehenden Anrufen auf einem Kommunikationsendgerät ist insbesondere zur Anwendung bei Mobilfunktelefonen vorgesehen. Durch das Verfahren wird eine Möglichkeit geschaffen, während eines gewissen Zeitraums unwichtige von wichtigen Anrufen trennen zu können. Solche Zeiträume können beispielsweise Besprechungen, Schlafenszeiten und dergleichen sein. Insbesondere kann durch die Vorgehensweise verhindert werden, dass durch das bislang notwendige vollständige Abschalten des Kommunikationsendgeräts wichtige oder erwünschte Telefonate verpasst werden.

Zur Durchführung des erfindungsgemäßen Verfahrens wird durch den Nutzer des Kommunikationsendgeräts eine Liste erzeugt, welche Anrufkennungen (Rufnummern oder Rufnummemblöcke) anderer Kommunikationsendgeräte umfasst, die als erwünschte Anrufer betrachtet werden. Die Anrufkennungen werden in einer Positivliste, welche auch unter dem Begriff der White Liste bekannt ist, gespeichert. Die die Anrufkennungen enthaltende Liste kann wahlweise direkt in dem Kommunikationsendgerät des Nutzers oder auf einem Rechner des Kommunikationsnetzes gespeichert werden, wobei das Kommunikationsgerät des Nutzers und die Kommunikationsendgeräte der anrufenden Nutzer Teilnehmer des Kommunikationsnetzes sind.

Weiterhin wird durch den Nutzer des Kommunikationsendgeräts ein Zeitraum angegeben, in dem die Positivliste aktiv sein soll. Der Zeitraum kann entweder durch die Vorgabe eines Startzeitpunkts und eines Endzeitpunkts oder durch die Vorgabe eines Startzeitpunkts und eines Zeitraums definiert sein. Die Definition des Zeitraums kann wahlweise wiederum in dem Kommunikationsendgerät des Nutzers selbst oder einem der Rechner des Kommunikationsnetzes gespeichert sein.

Es besteht die Möglichkeit, den durch den Nutzer definierten Zeitraum als einmalig gültigen Zeitraum festzulegen. Ebenso kann der definierte Zeitraum periodisch wiederholt werden. Prinzipiell stehen dabei die von Weckern auf Kommunikationsendgeräten bekannten Mechanismen zur Verfügung.

Durch diese vorbereitenden Maßnahmen ist eine Liste implementiert, die Anrufkennungen enthält, die während eines gewissen Zeitraums anrufen dürfen. Der Verfahrensablauf ist nun wie folgt.

In einem ersten Schritt S1 erfolgt ein eingehender Anruf eines anrufenden Kommunikationsendgeräts zu einer bestimmten Uhrzeit. Mit dem eingehenden Anruf wird dem angerufenen Kommunikationsendgerät die Anrufkennung, d.h. die Rufnummer, des anrufenden Kommunikationsendgeräts übermittelt.

In einem Schritt S2 wird überprüft, ob die Uhrzeit des Anrufs innerhalb des durch den Nutzer des angerufenen Kommunikationsendgeräts definierten Zeitraums liegt. Ist dies der Fall ("ja"), so wird gemäß Schritt S3 überprüft, ob die Anrufkennung des anrufenden Kommunikationsendgeräts in der dem angerufenen Kommunikationsendgerät zugeordneten Positivliste (White List) enthalten ist. Ist dies nicht der Fall ("nein"), so erfolgt gemäß Schritt S4 die Weiterleitung des Anrufs auf eine Mailbox des angerufenen Kommunikationsendgeräts. Alternativ kann der Anruf des anrufenden Kommunikationsendgeräts auch blockiert werden. Ebenso denkbar wäre, den Anruf des anrufenden Kommunikationsendgeräts nicht zu signalisieren, dem angerufenen Kommunikationsendgerät jedoch eine Kurznachricht über den nicht signalisierten Anruf zu übermitteln. Ist hingegen die Anrufkennung des anrufenden Kommunikationsendgeräts in der Positivliste enthalten ("ja"), so wird gemäß Schritt S5 der Anruf signalisiert. Wenn die Entscheidung in Schritt S2 "nein" ist, so wird gemäß Schritt S5 der Anruf ebenfalls signalisiert.

Die Schritte S2 und S3 könnten auch in umgekehrter Reihenfolge vorgenommen werden. Wesentlich für das erfindungsgemäße Verfahren ist die kombinierte Überprüfung, ob ein in einer Positivliste enthaltene Anrufkennung innerhalb eines vordefinierten Zeitraums erfolgt. Nur dann erfolgt eine Anrufsignalisierung.

Der Vorteil des beschriebenen Verfahrens besteht darin, dass während des vordefinierten Zeitraums lediglich vordefinierte, d.h. wichtige oder gewünschte, Telefonate von bestimmten Anrufkennungen, d.h. Nutzern, zugelassen werden.

## Patentansprüche

1. Verfahren zum Verarbeiten von eingehenden Anrufen auf einem Kommunikationsendgerät, insbesondere einem Mobilfunktelefon, bei dem zur Anrufsignalisierung anhand eines Vergleichs der Anrufkennung eines anrufenden Kommunikationsendgeräts mit Anrufkennungen, die in einer, dem angerufenen Kommunikationsendgerät zugeordneten Liste enthalten sind, überprüft wird, ob die Anrufkennung des anrufenden Kommunikationsendgeräts eine zulässige Anrufkennung ist,**dadurch gekennzeichnet, dass** zusätzlich überprüft wird, ob der Zeitpunkt des Anrufs des anderen Kommunikationsteilnehmers ein vorgegebenes Zeitkriterium erfüllt, wobei der Anruf nur dann signalisiert wird, wenn die Anrufkennung zulässig und das Zeitkriterium erfüllt sind.

2. Verfahren nach Anspruch 1, **dadurch gekennzeichnet, dass** als vorgegebenes Zeitkriterium überprüft wird, ob der Anruf innerhalb eines vorgegebenen Zeitraums liegt.

3. Verfahren nach Anspruch 2, **dadurch gekennzeichnet, dass** der vorgegebene Zeitraum hinsichtlich seines Beginns und seiner Länge durch einen Nutzer des Kommunikationsendgeräts festgelegt wird.

4. Verfahren nach einem der vorhergehenden Ansprüche, **dadurch gekennzeichnet, dass** die die Anrufkennungen enthaltende Liste in dem angerufenen Kommunikationsendgerät gespeichert ist.

5. Verfahren nach Anspruch 1 oder 2, **dadurch gekennzeichnet, dass** die die Anrufkennungen enthaltende Liste auf einem Rechner des Kommunikationsnetzes gespeichert ist, wobei die Kommunikationsendgeräte Teilnehmer des Kommunikationsnetzes sind.

6. Verfahren nach einem der vorhergehenden Ansprüche, **dadurch gekennzeichnet, dass** die erste Liste eine Positivliste (White List) ist, wobei nur solche Anruferkennungen zur Anrufsignalisierung ausgegeben werden, die in der ersten Liste übereinstimmend enthalten sind.

7. Verfahren nach einem der vorhergehenden Ansprüche, **dadurch gekennzeichnet, dass** der Anruf des anderen Kommunikationsendgeräts umgeleitet wird, wenn das Zeitkriterium nicht erfüllt ist und die Anrufkennung des anrufenden Kommunikationsendgeräts keine zulässige Anrufkennung ist.

8. Verfahren nach Anspruch 7, **dadurch gekennzeichnet, dass** die Umleitung auf eine Mailbox des Kommunikationsendgeräts erfolgt.

9. Verfahren nach einem der vorhergehenden Ansprüche, **dadurch gekennzeichnet, dass** die Zeit- und Listenabhängige Steuerung von Anrufen in einem Profil des Kommunikationsendgeräts hinterlegt wird.

10. Verfahren nach einem der vorhergehenden Ansprüche, **dadurch gekennzeichnet, dass** die Überprüfung des Zeitkriteriums vor der Überprüfung der Zulässigkeit der Anrufkennung des anrufenden Kommunikationsendgeräts erfolgt.
